**Europäisches Patentamt**

**European Patent Office**

**Office européen des brevets**

(11) Veröffentlichungsnummer: **0 241 810**
**B1**

(12) # EUROPÄISCHE PATENTSCHRIFT

(45) Veröffentlichungstag der Patentschrift:
07.02.90

(51) Int. Cl.⁴: **F16C 23/08**

(21) Anmeldenummer: **87104856.7**

(22) Anmeldetag: **02.04.87**

(54) **Radialkugellager.**

(30) Priorität: **10.04.86  DE 3612066**

(43) Veröffentlichungstag der Anmeldung:
**21.10.87 Patentblatt 87/43**

(45) Bekanntmachung des Hinweises auf die Patenterteilung:
**07.02.90 Patentblatt 90/6**

(84) Benannte Vertragsstaaten:
**DE GB IT**

(56) Entgegenhaltungen:
**DE-A- 436 284**
**DE-A- 2 144 269**
**DE-A- 2 345 866**
**FR-A- 1 040 232**
**GB-A- 695 057**
**GB-A- 2 095 346**
**US-A- 3 505 891**

(73) Patentinhaber: **INA Wälzlager Schaeffler KG,**
**Industriestrasse 1-3 Postfach 1220,**
**D-8522 Herzogenaurach(DE)**

(72) Erfinder: **Becker, Klaus, Dipl.-Ing. (FH),**
**Mater-Rosalie-Weg 1, D-8522 Herzogenaurach(DE)**

(74) Vertreter: **Klug, Horst, Dipl.-Ing. (FH), c/o INA Wälzlager**
**Schaeffler KG Postfach 12 20,**
**D-8522 Herzogenaurach(DE)**

**Beschreibung**

Gegenstand der Erfindung ist ein Radialkugellager, bestehend aus zwei konzentrisch ineinander angeordneten Lagerteilen, die in einander zugekehrten Mantelflächen je eine Kugellaufrille aufweisen, in denen ein Kranz von Kugeln abrollt, wobei von diesen Lagerteilen das eine feststeht und das andere umläuft, und wobei die Kugellaufrille des feststehenden Lagerteils bei über den gesamten Umfang gleichbleibender Rillentiefen an unterschiedlichen Umfangsstellen die Kugeln mit unterschiedlich großem axialen Spiel umfaßt, wobei die Laufrillenkontur kontinuierlich von der einen in die andere Umfangsstelle übergeht.

Im Textilmaschinenbau sind Lager zum Einsatz in Druckrollen bekannt, bei denen sich ein umlaufender Außenring und ein feststehender Innenring gegenüber einer den Innenring tragenden Achse in einer Ebene pendelnd bewegen können. Dazu wird in einer aufwendigen Lagerkonstruktion mit mehreren Bauteilen der Innenring mittels eines quer zu seiner Achse verlaufenden Bolzens pendelnd auf einer Tragachse gelagert, wobei der Innenring in seiner Bohrung zwei planparallele Flächen aufweist, die quer zum Bolzen verlaufen und zwischen die die Tragachse nahezu spielfrei eingreift (DE-A 2 923 871).

Aus der US-A 3 505 891 ist ein selbsteinstellendes Radiallager bekannt, bei dem die Laufrille bei gleichbleibender Rillentiefe sich von einem Punkt minimaler Breite auf eine maximale Breite an einem diametral gegenüberliegenden Punkt erweitert. Diese Lagerbauart ermöglicht prinzipiell Pendelbewegungen des Außenringes gegenüber dem Innenring respektive der tragenden Achse, es hat jedoch den Nachteil, daß die Schwenkachse durch nur einen Punkt im Teilkreis, nämlich den Mittelpunkt der in der engsten Laufbahnstelle befindlichen Kugel, festgelegt ist, so daß unkontrollierte Taumelbewegungen auftreten können. Des weiteren ist diese Lagerbauart aufgrund der Lage der Pendelachse nur bedingt für den Einsatz in Andruckrollen in Textilmaschinen geeignet.

Der Erfindung liegt die Aufgabe zugrunde, die erwähnten Nachteile zu beseitigen und bei minimalem Bauraum und geringstem Herstellungsaufwand, das heißt ohne Anwendung zusätzlicher Bauelemente, eine solche Lageranordnung zu gestalten.

Erfindungsgemäß wird diese Aufgabe dadurch gelöst, daß die Kugellaufrille des feststehenden Teils zwei einander diametral gegenüberliegende Umfangsstellen aufweist, an denen sie die Kugeln mit nur geringem Spiel umfaßt, während sie an zwei ebenfalls einander diametral gegenüberliegenden Umfangsstellen, die in Umfangsrichtung zwischen den erstgenannten Umfangsstellen liegen, gegenüber der Kugelkontur deutlich verbreitert ist.

Die Pendelebene ist demnach die Ebene, die sowohl die Lagerachse als auch die Stellen mit verbreiterter Kugelkontur enthält.

Eine Ausführungsform der Erfindung sieht vor, die Kugellaufrille nach einer Kreiskontur zu formen, wobei der Radius an den einen Stellen mindestens das 1,04-fache des Kugelradius und an den anderen Stellen mindestens das 1,4-fache des Kugelradius betragen soll, um eine deutlich wahrzunehmende Schwenkbewegung sicherzustellen.

Eine weitere Ausführungsform der Erfindung sieht vor, die Kugellaufrille elliptisch zu formen, da – bei sonst gleichen Abmessungen im Vergleich zur Kreiskontur – hier die geometrische Form, in Bereichen seitlich zur tiefsten Stelle der Laufrille, einer Schwenkbewegung entgegenkommt.

Eine fertigungstechnisch besonders einfach herzustellende Ausgestaltung der Laufrille sieht vor, daß deren Kontur von zwei seitlichen Kreisabschnitten begrenzt ist, die durch eine parallel zur Lagerachse verlaufende Gerade miteinander verbunden sind.

Es ist ebenfalls denkbar, daß das äußere Lagerteil feststeht und das innere Lagerteil umläuft. In diesem Fall ist es sinnvoll, die Laufrillenkontur an den Stellen mit großem axialen Lagerspiel auch einem Kreisabschnitt zu formen, dessen Radius dem Abstand der tiefsten Stelle der Laufrille von der Lagerachse entspricht, womit ein weiter Schwenkwinkel ermöglicht wird.

Um beim Einbau des Lagers in ein Bauteil die Pendelebene des Lagers eindeutig festzulegen und um ein späteres Verdrehen des Lagers zu verhindern, ist es vorteilhaft, das Lager mit einer Ausnehmung oder dergleichen zu versehen, welche formschlüssig in einen Vorsprung oder dergleichen des Bauteils eingreift.

In den Zeichnungen sind Ausführungsbeispiele der Erfindung dargestellt. Es zeigen:

Fig. 1 einen Längsschnitt durch eine Druckrolle mit einem Radialkugellager gemäß der Erfindung und

Fig. 2 bis 4 Ausführungsformen von Laufrillen in gegenüber Fig. 1 vergrößerter Darstellung.

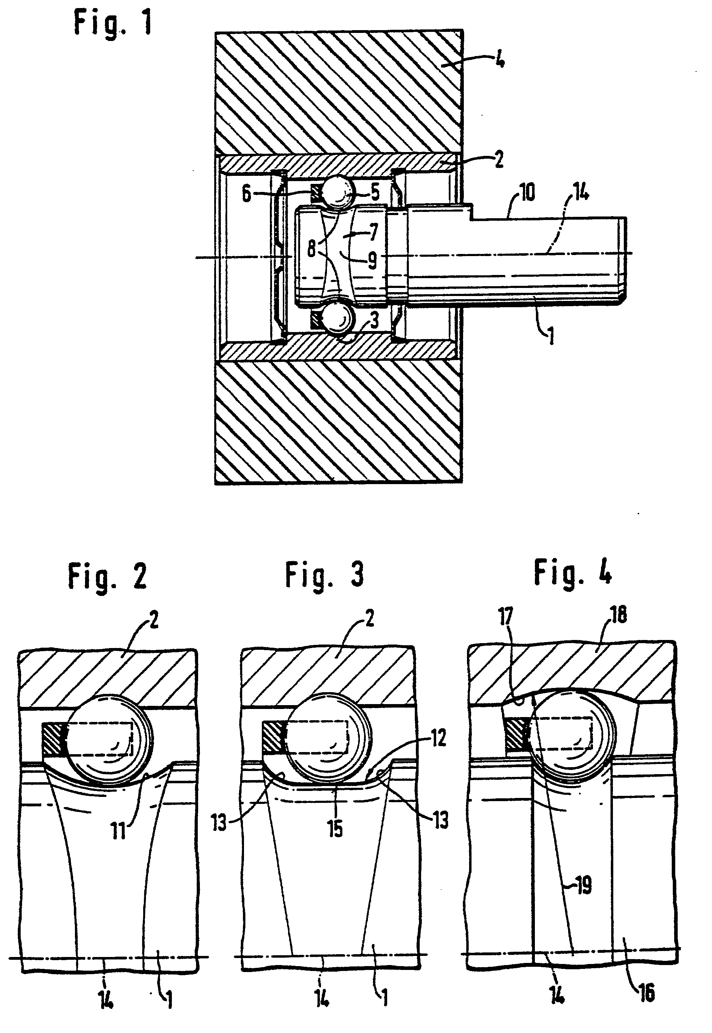

Die in Fig. 1 dargestellte Druckrolle besteht aus einem feststehenden inneren Lagerteil 1, das als Achse ausgeführt ist, und aus einem äußeren umlaufenden Lagerteil 2 mit einer Laufrille 3 und einem elastischen Bezug 4, wobei zwischen diesen beiden Lagerteilen ein Kranz von Kugeln 5 abrollt, die in einem Käfig 6 geführt sind. Die Laufrille 7 feststehenden Teils 1 zeigt eine Kontur derart, daß an zwei sich diametral gegenüberliegenden Punkten 8 die Laufrille eine Kreiskontur aufweist, die deutlich größer als der Kugelradius ist, wobei an zwei anderen sich diametral gegenüberliegenden Stellen 9 der Radius der Laufrille nur wenig größer als der Kugelradius ist. Zwischen diesen Stellen ändert sich der Krümmungsradius der Laufrille kontinuierlich. Ein Kippen des äußeren Lagerteiles 2 ist demnach möglich um eine Achse, die durch die beiden einander diametral gegenüberliegenden Punkte 9 geht. Das feststehende innere Lagerteil 1 ist mit einer Abflachung 10 versehen, um es verdrehsicher in einem nicht dargestellten Bauteil befestigen zu können.

Fig. 2 zeigt eine Ausführung, bei der die Laufrille 11 des Lagerteils 1 im Gegensatz zur Laufrille in Fig. 1 an den Stellen 8 nicht die Kontur eines Kreisbogens, sondern die einer Ellipse aufweist.

Die in Fig. 3 gezeigte Ausführungsform der Laufrille 12 eines inneren feststehenden Lagerteils 1 zeigt an den Stellen 8 eine Kontur, bei der die Laufbahn durch zwei seitliche Kreisabschnitte 13 begrenzt ist, die durch eine parallel zur Lagerachse 14 verlaufende Gerade 15 miteinander verbunden sind, wobei sich die Länge der Geraden beim Übergang zu den Stellen 9 kontinuierlich verkleinert.

Bei der Ausführungsform nach Fig. 4, bei der das innere Lagerteil 16 umläuft und pendeln kann, ist die Laufrille 17 des feststehenden äußeren Lagerteils 18 an den Stellen des großen axialen Lagerspiels durch einen Kreisabschnitt gebildet, dessen Radius 19 durch den Abstand der tiefsten Stelle der Laufrille von der Lagerachse gegeben ist. Durch diese From wird erreicht, daß das innere Lagerteil 16 möglichst weit schwenken kann.

## Patentansprüche

1. Radialkugellager, bestehend aus zwei konzentrisch ineinander angeordneten Lagerteilen (1, 2, 16, 18), die in einander zugekehrten Mantelflächen je eine Kugellaufrille aufweisen, in denen ein Kranz von Kugeln (5) abrollt, wobei von diesen Lagerteilen (1, 2, 16, 18), das eine (1, 18) feststeht und das andere (2, 16) umläuft, und wobei die Kugellaufrille (7, 11, 12, 17) des feststehenden Lagerteils (1, 18) bei über den gesamten Umfang gleichbleibender Rillentiefe an unterschiedlichen Umfangsstellen die Kugeln (5) mit unterschiedlich großem axialen Spiel umfaßt, wobei die Lafurillenkontur kontinuierlich von der einen in die andere Umfangsstelle übergeht, dadurch gekennzeichnet, daß die Kugellaufrille (7, 11, 12, 17) des feststehenden Teils (1, 18) zwei einander diametral gegenüberliegende Umfangsstellen (9) aufweist, an denen sie die Kugeln (5) mit nur geringem Spiel umfaßt, während sie an zwei ebenfalls einander diametral gegenüberliegenden Umfangsstellen (8), die in Umfangsrichtung zwischen den erstgenannten Umfangsstellen (9) liegen, gegenüber der Kugelkontur deutlich verbreitert ist.

2. Radialkugellager nach Anspruch 1, dadurch gekennzeichnet, daß die Kugellaufrille (7) eine Kreiskontur aufweist, deren Radius an den einen Stellen (9) nur wenig größer als der Kugelradius ist, insbesondere das 1,04-fache des Kugelradius beträgt, während sie an den anderen Stellen (8) deutlich größer als der Kugelradius ist, insbesondere wenigstens das 1,4-fache des Kugelradius beträgt.

3. Radialkugellager, nach Anspruch 1, dadurch gekennzeichnet, daß die Kugellaufrille (11) die Kontur eines Ellipsenabschnittes aufweist, wobei die große Achse der Ellipse parallel zur Lagerachse (14) verläuft.

4. Radialkugellager nach Anspruch 2, dadurch gekennzeichnet, daß die Kugellaufrille (12) an den anderen Stellen (8) von zwei seitlichen Kreisabschnitten (13) begrenzt ist, die durch eine parallel zur Lagerachse (14) verlaufende Gerade (15) miteinander verbunden sind.

5. Radialkugellager nach Anspruch 1 oder 2, bei dem das radial äußere Lagerteil (18) feststeht, dadurch gekennzeichnet, daß die Laufrillenkontur (17) an den anderen Stellen durch einen Kreisabschnitt gebildet ist, dessen Radius (19) dem Abstand der tiefsten Stelle der Laufrille (17) von der Lagerachse (14) entspricht.

6. Radialkugellager nach einem der vorhergehenden Ansprüche, dadurch gekennzeichnet, daß das feststehende Lagerteil mit wenigstens einer Ausnehmung (10) bzw. wenigstens einem Vorsprung zum Zwecke einer Verdrehsicherung in einen Vorsprung bzw. eine Ausnehmung eines angrenzenden Bauteils eingreift.

## Claims

1. Radial ball bearing consisting of two bearing parts (1, 2, 16, 18) arranged concentrically in each other and having one ball groove each in peripheral surfaces facing each other, in which grooves roll a set of balls (5), one (1, 18) of these bearing parts (1, 2, 16, 18) being stationary while the other (2, 16) rotates and the ball groove (7, 11, 12, 17) of the stationary bearing part (1, 18) having a uniform groove depth over the whole periphery but enclosing the balls (5) with differing axial clearance at different points of the periphery, the groove contour merging continuously from the one part of the periphery into the other, characterized in that the ball groove (7, 11, 12, 17) of the stationary part (1, 18) comprises two peripheral points (9) diametrically opposite to each other at which it encloses the balls (5) only with slight clearance whereas at two peripheral points (8), also diametrically opposite to each other and located between the first-mentioned peripheral points (9) in the peripheral direction, the ball groove (7, 11, 12, 17) is clearly wider than the ball contour.

2. Radial ball bearing according to Claim 1, characterized in that the ball groove (7) has a circular contour whose radius at the one points (9) is only slightly larger than the ball radius, in particular 1.04 times the ball radius, whereas at the other points (8) it is clearly larger than the ball radius, in particular at least 1.4 times the ball radius.

3. Radial ball bearing according to Claim 1, characterized in that the ball groove (11) has the contour of a part of an ellipse, with the long axis of the ellipse extending parallel to the bearing axis (14).

4. Radial ball bearing according to Claim 2, characterized in that the ball groove (12) at the other points (8) is limited by two lateral circular segments (13) which are joined to each other by a straight line (15) parallel to the bearing axis (14).

5. Radial ball bearing according to Claim 1 or 2 in which the radially outer bearing part (18) is stationary, characterized in that the ball groove contour (17) at the other points is formed by a segment whose radius (19) corresponds to the distance of the deepest point of the ball groove (17) from the bearing axis (14).

6. Radial ball bearing according to one of the preceding claims, characterized in that the stationary bearing part has at least one recess (10) or at least one projection which interlocks with a projection or a recess as the case may be, of an adjacent component to act as a safety device against turning.

**Revendications**

1. Palier radial à billes constitué par deux parties de palier (1, 2, 16, 18) agencées concentriquement l'une dans l'autre et comprenant chacune dans des surfaces périphériques vis-à-vis l'une de l'autre une gorge à billes, gorges dans lesquelles une couronne de billes (5) roule, une de ces parties de palier (1, 2, 16, 18) étant fixe et l'autre (2, 16) pouvant tourner la gorge à billes (7, 11, 12, 17) de la partie fixe (1, 18) qui a une profondeur constante de gorge sur toute la périphérie, entourant les billes (5) avec un jeu axial différent en des endroits différents de la périphérie, le contour de la gorge à billes se changeant de manière continue à partir de l'un endroit de la périphérie jusqu'à l'autre, caractérisé en ce que la gorge à billes (7, 11, 12, 17) de la partie fixe (1, 18) comprend deux endroits périphériques (9) diamétralement opposés l'un à l'autre où elle n'entoure les billes (5) qu'avec un jeu faible tandis qu'en deux endroits périphériques (8), également diamétralement opposés l'un à l'autre et situés en direction périphérique entre les deux premiers endroits périphériques (9), elle est nettement plus large que le contour des billes.

2. Palier radial à billes selon la revendication 1, caractérisé en ce la gorge à billes (7) a un contour circulaire, dont le rayon en les uns endroits (9) n'est que faiblement plus grand que le rayon des billes, en particulier 1,04 fois le rayon des billes, tandis qu'en les autres endroits (8) il est nettement plus large que le rayon des billes, en particulier 1,4 fois le rayon des billes.

3. Palier radial à billes selon la revendication 1, caractérisé en ce que la gorge à billes (11) a le contour d'une partie d'une ellipse dont l'axe long est parallèle à l'axe (14) du palier.

4. Palier radial à billes selon la revendication 2, caractérisé en ce que la gorge à billes (12) est délimitée en les autres endroits (8) par deux segments de cercle (13) latéraux, liés l'un à l'autre par une ligne droite (15) parallèle à l'axe (14) du palier.

5. Palier radial à billes selon la revendication 1 ou 2 dans lequel la partie de palier radialement extérieure (18) est fixe, caractérisé en ce que le contour de la gorge à billes (17) en les autres endroits est en forme d'un segment de cercle dont le rayon (19) correspond à la distance entre l'endroit le plus profond de la gorge à billes (17) et l'axe (14) du palier.

6. Palier radial à billes selon une des revendications précédentes, caractérisé en ce que la partie fixe de palier est munie au moins d'un évidement (10) ou au moins d'une saillie qui, pour prévenir un contournement, s'engage avec la saillie ou l'évidement d'un composant avoisinant.

**Fig. 1**

**Fig. 2**   **Fig. 3**   **Fig. 4**